# EUROPÄISCHE PATENTANMELDUNG

(11) **EP 3 564 051 A1**
(43) Veröffentlichungstag der Anmeldung: **06.11.2019**
(21) Anmeldenummer: 19172359.2
(22) Anmeldetag: 02.05.2019
(51) Int. Cl.: B60D 1/30, B60D 1/62, B60L 15/20, B60L 50/53, B60T 7/00, B60L 50/30, B60T 7/20, B60T 8/17

(54) **ANHÄNGERSTABILISIERUNGSEINRICHTUNG FÜR EINEN ANHÄNGER SOWIE ANHÄNGER**

(30) Priorität: 03.05.2018 DE 202018102469 U
(71) Anmelder: Reich GmbH Regel- und Sicherheitstechnik, 35713 Eschenburg-Wissenbach (DE); Knott GmbH, D-83125 Eggstätt (DE)
(72) Erfinder: BENDER, Steffen, 35713 Eschenburg (DE); THEISS, Marc André, 35687 Dillenburg (DE); MERTINKO, Christian, 83349 Palling (DE); STRASSER, Josef, 83257 Gstadt am Chiemsee (DE)
(74) Vertreter: Hofstetter, Schurack & Partner

(57) **Zusammenfassung**

Die Erfindung betrifft eine Anhängerstabilisierungseinrichtung (18) für einen Anhänger (10), insbesondere für einen Wohnwagen, einen Caravan, einen Bootsanhänger, einen Verkaufswagen, einen Transportanhänger oder einen Autotransportanhänger, mit einer wenigstens einem Aktor (20), mittels welchem unter Betreiben des Aktors (20) eine Fahrt des Anhängers (10) zu stabilisieren ist, und mit wenigstens einem Anschlusselement, welches mit einer zum Bereitstellen von Energie ausgebildeten Energiequelle eines Zugfahrzeugs zum Bewegen des Anhängers (20) verbindbar ist, sodass der Aktor (20) über das Anschlusselement mit von der Energiequelle bereitgestellter Energie versorgbar und dadurch mittels der bereitgestellten Energie betreibbar ist, wobei die Anhängerstabilisierungseinrichtung (18) wenigstens einen eigenen, zum Speichern von Energie ausgebildeten Energiespeicher (22) aufweist, mittels welchem der Aktor (20) mit in dem Energiespeicher (22) gespeicherter Energie versorgbar und dadurch mittels der in dem Energiespeicher (22) gespeicherten Energie betreibbar ist.

## Beschreibung

Die Erfindung betrifft eine Anhängerstabilisierungseinrichtung für einen Anhänger, insbesondere für einen Wohnwagen, einen Caravan, einen Bootsanhänger, einen Verkaufswagen, einen Transportanhänger oder einen Autotransportanhänger, gemäß dem Oberbegriff von Anspruch 1. Ferner betrifft die Erfindung einen Anhänger mit einer solchen Anhängerstabilisierungseinrichtung.

Derartige Anhängerstabilisierungseinrichtungen für Anhänger und derartige Anhänger mit solchen Anhängerstabilisierungseinrichtungen sind aus dem allgemeinen Stand der Technik bereits hinlänglich bekannt. Der Anhänger ist beispielsweise als ein Wohnwagen, ein Caravan, ein Bootsanhänger, ein Verkaufswagen, ein Transportanhänger oder ein Autotransportanhänger ausgebildet. Die Anhängerstabilisierungseinrichtung umfasst dabei wenigstens einen Aktor, mittels welchem unter Betreiben des Aktors eine Fahrt des Anhängers stabilisiert werden kann. Darunter ist insbesondere zu verstehen, dass mittels des Aktors unerwünschten Bewegungen des Anhängers entgegengewirkt, insbesondere aktiv entgegengewirkt, werden kann, indem der Aktor betrieben wird. Hierdurch kann beispielsweise ein gewünschter Zustand, insbesondere ein gewünschter Fahrzustand, des Anhängers herbeigeführt werden. Insbesondere können mittels der Anhängerstabilisierungseinrichtung unerwünschte beziehungsweise übermäßige Aufbaubewegungen des Anhängers relativ zu einer Fahrbahn, entlang welcher der Anhänger fährt, vermieden beziehungsweise solchen unerwünschten Aufbaubewegungen entgegengewirkt werden.

Die Anhängerstabilisierungseinrichtung weist des Weiteren wenigstens ein Anschlusselement auf, welches mit einer zum Bereitstellen von Energie ausgebildeten Energiequelle eines beispielsweise als Kraftwagen ausgebildeten Zugfahrzeugs zum Bewegen beziehungsweise Ziehen des Anhängers ausgebildet ist. Da die Energiequelle Bestandteil des Zugfahrzeugs und nicht Bestandteil des Anhängers ist, ist die Energiequelle eine bezüglich des Anhängers und somit bezüglich der Anhängerstabilisierungseinrichtung externe, zusätzlich dazu vorgesehene Komponente. Das beispielsweise als Kraftwagen, insbesondere als Personenkraftwagen, ausgebildete Zugfahrzeug umfasst beispielsweise ein Bordnetz, in welches die Energiequelle eingebunden ist. Somit kann beispielsweise die Energiequelle die in ihr gespeicherte Energie über das Bordnetz bereitstellen. Das Anschlusselement kann beispielsweise zumindest elektrisch mit dem Bordnetz verbunden werden. Mit anderen Worten kann das Anschlusselement mit dem Bordnetz verbunden werden, sodass beispielsweise die von der Energiequelle über das Bordnetz bereitgestellte Energie von dem Bordnetz auf das Anschlusselement und von dem Anschlusselement an den Aktor übertragen werden kann. Dies bedeutet, dass der Aktor über das Anschlusselement mit von der Energiequelle bereitgestellter Energie versorgbar und dadurch mittels der bereitgestellten Energie betreibbar ist. Dadurch, dass das Anschlusselement mit der Energiequelle zumindest mittelbar, insbesondere direkt, verbunden werden kann, kann die von der Energiequelle bereitgestellte Energie auf das beziehungsweise zu dem Anschlusselement übertragen und über das Anschlusselement bereitgestellt werden. Die von dem Anschlusselement bereitgestellte Energie kann auf den beziehungsweise zu dem Aktor übertragen werden. Mit anderen Worten kann der Aktor mit der von dem Anschlusselement bereitgestellten Energie versorgt werden, sodass der Aktor mit der von dem Anschlusselement bereitgestellten Energie betrieben werden kann. Hierzu ist beispielsweise der Aktor, insbesondere zumindest elektrisch, mit dem Anschlusselement verbunden.

Aufgabe der vorliegenden Erfindung ist es, eine Anhängerstabilisierungseinrichtung und eine Anhänger der eingangs genannten Art derart weiterzuentwickeln, dass ein besonders sicherer Betrieb des Anhängers gewährleistet werden kann.

Diese Aufgabe wird erfindungsgemäß durch eine Anhängerstabilisierungseinrichtung mit den Merkmalen des Anspruchs 1 sowie durch einen Anhänger den Merkmalen des Anspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Anhängerstabilisierungseinrichtung für einen Anhänger, insbesondere für einen Wohnwagen, einen Caravan, einen Bootsanhänger, einen Verkaufswagen, einen Transportanhänger oder einen Autotransportanhänger. Die Anhängerstabilisierungseinrichtung umfasst wenigstens einen Aktor, mittels welchem unter Betreiben des Aktors eine Fahrt des Anhängers zu stabilisieren ist. Dies bedeutet, dass mittels der Anhängerstabilisierungseinrichtung eine Fahrt des Anhängers stabilisiert werden kann, indem der Aktor betrieben wird. Unter der Stabilisierung der Fahrt des Anhängers kann insbesondere verstanden werden, dass mittels des Aktors einem unerwünschten Fahrzustand beziehungsweise unerwünschten, relativ zu einer Fahrbahn, entlang welcher der Anhänger fährt, erfolgenden Aufbaubewegung des Anhängers entgegengewirkt werden kann, indem der Aktor betrieben wird. Auf diese Weise kann beispielsweise eine unerwünschte Fahrsituation beziehungsweise ein unerwünschter Fahrzustand des Anhängers vermieden werden, und ein erwünschter Zustand, insbesondere ein erwünschter Fahrzustand, des Anhängers kann bewirkt werden. Dadurch, dass unerwünschten, relativ zu einer Fahrbahn erfolgenden Aufbaubewegung des entlang der Fahrbahn fahrenden Anhängers mittels des Aktors entgegengewirkt werden kann, indem der Aktor betrieben wird, kann beispielsweise vermieden werden, dass der Anhänger umkippt und/oder dass es zu unerwünschten beziehungsweise übermäßigen Schlingerbewegungen des Anhängers, insbesondere relativ zu einem mit dem Anhänger koppelbaren oder gekoppelten Zugfahrzeug, kommt. Somit können beispielsweise mittels des wenigstens einen Aktors übermäßige Bewegungen, insbesondere übermäßige Schlingerbewegungen, des Anhängers relativ zu dem Zugfahrzeug vermieden werden.

Die Anhängerstabilisierungseinrichtung umfasst des Weiteiren wenigstens ein Anschlusselement, welches mit einer zum Bereitstellen von Energie ausgebildeten Energiequelle eines Zugfahrzeugs zum Bewegen beziehungsweise Ziehen des Anhängers ausgebildet ist. Dies bedeutet, dass das Anschlusselement zumindest mittelbar, insbesondere direkt, mit dem Zugfahrzeug und somit mit der Energiequelle des Zugfahrzeugs verbunden werden kann. Dadurch kann die von der Energiequelle bereitgestellte Energie von der Energiequelle an das beziehungsweise auf das Anschlusselement übertragen und schließlich von dem Anschlusselement bereitgestellt werden. Da die Energiequelle Bestandteil des Zugfahrzeugs und nicht etwa Bestandteil des Anhängers ist, und da das Zugfahrzeug ein bezüglich des Anhängers externes, zusätzlich zu dem Anhänger vorgesehenes und separat von dem Anhänger ausgebildetes Fahrzeug ist, ist die Energiequelle eine bezüglich des Anhängers und somit bezüglich der Anhängerstabilisierungseinrichtung externe, zusätzlich dazu vorgesehene Komponente, welche nicht Bestandteil des Anhängers beziehungsweise nicht Bestandteil der Anhängerstabilisierungseinrichtung ist.

Dabei ist der Aktor über das Anschlusselement mit von der Energiequelle bereitgestellter Energie versorgbar und dadurch mittels der bereitgestellten Energie betreibbar. Mit anderen Worten kann die von der Energiequelle bereitgestellte und an das Anschlusselement übertragene Energie von dem Anschlusselement bereitgestellt und dadurch von dem Anschlusselement an den beziehungsweise zu dem Aktor übertragen werden, sodass der Aktor mit der von dem Anschlusselement bereitgestellten Energie versorgbar ist. Hierdurch kann der Aktor mittels der von dem Anschlusselement bereitgestellten Energie betrieben werden, sodass beispielsweise unter Nutzung der von dem Anschlusselement und somit von der Energiequelle bereitgestellten Energie unerwünschten Aufbaubewegungen des Anhängers beziehungsweise unerwünschten Relativbewegungen zwischen dem Anhänger und dem Zugfahrzeug entgegengewirkt werden kann.

Um nun einen besonders sicheren Betrieb des Anhängers gewährleisten zu können, ist es erfindungsgemäß vorgesehen, dass die Anhängerstabilisierungseinrichtung wenigstens einen eigenen, zum Speichern von Energie ausgebildeten Energiespeicher aufweist, mittels welchem der Aktor mit in dem Energiespeicher gespeicherter Energie versorgbar und dadurch mittels der in dem Energiespeicher gespeicherten Energie betreibbar ist. Mit anderen Worten kann die in dem Energiespeicher gespeicherte Energie von dem Energiespeicher zu dem beziehungsweise auf den Aktor übertragen werden, sodass der Aktor mittels der in dem Energiespeicher gespeicherten Energie betrieben werden kann. Dadurch kann die Fahrt des Anhängers unter Nutzung der in dem Energiespeicher gespeicherten Energie stabilisiert werden, sodass die erfindungsgemäße Anhängerstabilisierungseinrichtung eine von der Energiequelle beziehungsweise von der von der Energiequelle bereitgestellten Energie zumindest nahezu unabhängige Stabilisierung der Fahrt des Anhängers ermöglicht.

Der Erfindung liegt dabei insbesondere die folgende Erkenntnis zugrunde: Bei nahezu allen modernen, beispielsweise als Personenkraftwagen ausgebildeten Fahrzeugen sind von deren Hersteller unterschiedliche Wege vorgesehen, um einen besonders emissionsarmen Betrieb zu ermöglichen und somit beispielsweise geltende Abgasnormen einzuhalten. Das jeweilige Fahrzeug weist beispielsweise als Energiequelle eine Batterie, insbesondere eine Starterbatterie auf, in beziehungsweise mittels welcher elektrische Energie beziehungsweise elektrischer Strom gespeichert werden kann. Dabei weist das jeweilige Fahrzeug darüber hinaus einen auch als Lichtmaschine bezeichneten Generator auf, welcher dazu ausgebildet ist, mechanische Energie in elektrische Energie umzuwandeln und die elektrische Energie bereitzustellen. Die elektrische Energie kann der Batterie zugeführt und in der Batterie gespeichert werden, wodurch die Batterie geladen beziehungsweise aufgeladen wird. Durch Laden beziehungsweise Aufladen der Batterie wird ihr Ladungszustand erhöht. Darunter ist zu verstehen, dass eine in der Batterie gespeicherte Menge an elektrischer Energie erhöht wird.

Bei einigen Fahrzeugen kann vorgesehen sein, dass bei einem gewissen Ladungszustand der Starterbatterie die Lichtmaschine weggeschaltet wird, sodass dann die Starterbatterie nicht mehr mittels der Lichtmaschine geladen wird. Die Starterbatterie ist beispielsweise in ein Bordnetz eingebunden, von welchem elektrische Energie auf das Anschlusselement des Anhängers beziehungsweise der Anhängerstabilisierungseinrichtung übertragen werden kann. Da die Lichtmaschine weggeschaltet wird, wird beispielsweise von der Lichtmaschine keine elektrische Energie mehr in das Bordnetz eingespeist. Durch das Wegschalten der Lichtmaschine kommt es in Folge von jeweiligen Leitungslängen von der Starterbatterie bis zu einem fahrzeugseitigen Kontaktelement, welches beispielsweise als 13-Pol-Steckdose ausgebildet ist, zu einem großen Spannungsverlust in der Energieversorgung des Anhängers. Hierbei kann die Spannung auf 10,5 Volt absinken. Bei Aktivierung einer Start-Stopp-Automatik kann die Spannung sogar auf 8 Volt absinken. Bei einigen Fahrzeugen ist es sogar vorgesehen, dass die gesamte Energieversorgung abgeschaltet wird. Hierbei werden beispielsweise der so genannte Pin 9, Pin 10 und Pin 11 der 13-Pol-Steckdose abgeschaltet beziehungsweise nicht mehr mit Energie versorgt. In der Folge kann die beispielsweise elektrisch betreibbare Anhängerstabilisierungseinrichtung in ihrem Betrieb beeinträchtigt werden, da beispielsweise keine oder eine nur unzureichende Menge an Energie von dem Fahrzeug an die Anhängerstabilisierungseinrichtung übertragen werden kann, um die Anhängerstabilisierungseinrichtung zu betreiben. So ist beispielsweise bei Zugfahrzeugen mit kompletter Abschaltung der Energieversorgung des Anhängers für die Dauer der Abschaltung keine Funktion der Anhängerstabilisierungseinrichtung vorhanden, wenn diese beispielsweise elektrisch betreibbar ist.

Bei Fahrzeugen mit Wegschaltung der Lichtmaschine kann ein eingeschränkter Betrieb von Systemen und somit der Anhängerstabilisierungseinrichtung des Anhängers bis zu einer individuellen Mindestspannung ermöglicht werden. Dabei ist der Betrieb jedoch in der Regel dahingehend eingeschränkt, dass zwar eine Sensorik auf gewünschte Weise arbeitet, jedoch kann - je nach Funktionsbetrieb der Anhängerstabilisierungseinrichtung (Ziehen/Drücken über eine elektromotorisch angesteuertes Getriebe am/an Bremsgestänge/Bremszügen/Waagbalken) - die Auslösekraft nicht mehr den ursprünglich vorgesehenen optimalen Kräften entsprechen und damit die Abbremswirkung auch entsprechend geringer ausfallen. Insbesondere bei Anhängerstabilisierungseinrichtungen mit selbsthemmenden Getrieben kann die Anhängerstabilisierungseinrichtung in einen undefinierten Zustand geraten und dort verharren. Dies kann zu unerwünschten Effekten führen, falls keine entsprechenden Gegenmaßnahmen getroffen sind. Zudem kann die einfach auch als Stabilisierungseinrichtung bezeichnete Anhängerstabilisierungseinrichtung durch wiederholtes Wegschalten der Lichtmaschine beziehungsweise aufgrund von Spannungsabfällen in einen Fehlerzustand fallen und so auch bei wieder vorhandener, ausreichender Spannungsversorgung in einen nicht funktionsfähigen Zustand geraten.

Die zuvor genannten Probleme und Nachteile können nun mittels der erfindungsgemäßen Anhängerstabilisierungseinrichtung vermieden werden, da diese ihren eigenen Energiespeicher aufweist. Der eigene Energiespeicher der Anhängerstabilisierungseinrichtung ist eine Komponente der Anhängerstabilisierungseinrichtung und kann beispielsweise ein zuvor beschriebenes Wegschalten der Lichtmaschine beziehungsweise ein vollständiges, fahrzeugseitiges Abschalten der Energieversorgung des Anhängers kompensieren. Dadurch ist die Anhängerstabilisierungseinrichtung auch dann betriebsbereit, wenn sie nicht mehr von dem Zugfahrzeug mit einer hinreichenden Menge an Energie oder gar nicht mehr mit Energie versorgt wird. Dann kann der Aktor zumindest teilweise oder vollständig mit Energie betrieben werden, die in dem Energiespeicher der Anhängerstabilisierungseinrichtung gespeichert ist. Mit anderen Worten kann der Energiespeicher im Falle des Wegfalls beziehungsweise des Absinkens der von dem Fahrzeug bereitgestellten Energie, insbesondere der Versorgungsspannung, die zum einwandfreien Betrieb der Stabilisierungseinrichtung notwendige Energie, insbesondere für mindestens einen Stabilisierungs- beziehungsweise Auslösefall, bereitstellen und dem Aktor zuführen.

Dabei hat es sich als besonders vorteilhaft gezeigt, wenn der Energiespeicher dazu ausgebildet ist, eine für zumindest einen Stabilisierungsvorgang des Aktors ausreichende Menge an Energie zu speichern. Unter einem solchen Stabilisierungsvorgang ist ein Betrieb des Aktors zu verstehen, sodass die Fahrt des Anhängers stabilisiert wird.

In weiterer Ausgestaltung der Erfindung ist der Energiespeicher dazu ausgebildet ist, eine solche Menge an Energie zu speichern, die ausreicht, um eine Elektronik, insbesondere eine Regel- und/oder Steuerungselektronik, der Anhängerstabilisierungseinrichtung dauerhaft während einer Zeitspanne zu betreiben, während welcher eine durch die Energiequelle bewirkte Versorgung der Anhängerstabilisierungseinrichtung mit Energie unterbleibt oder gegenüber einem Normalzustand zumindest reduziert ist. Hierdurch kann ein dauerhafter Betrieb der Elektronik, insbesondere einer auch als Prozessor oder CPU bezeichneten zentralen Prozessoreinheit, sichergestellt werden, während die Anhängerstabilisierungseinrichtung nicht oder gegenüber dem Normalbetrieb mit einer geringeren Menge an Energie von der Energiequelle des Zugfahrzeugs versorgt wird. Unter dem dauerhaften Betrieb ist insbesondere zu verstehen, dass die CPU während des dauerhaften Betriebs Sensoren der Anhängerstabilisierungseinrichtung abfragen, das heißt Signale dieser Sensoren empfangen kann.

Eine weitere Ausführungsform zeichnet sich dadurch aus, dass der Aktor als elektrisch betreibbarer Aktor ausgebildet ist. Mittels des elektrisch betreibbaren Aktors ist unter elektrischem Betreiben des Aktors eine Fahrt des Anhängers zu stabilisieren. Unter dem elektrischen Betreiben des Aktors ist zu verstehen, dass der Aktor mit elektrischer Energie beziehungsweise elektrischem Strom versorgt wird, sodass der Aktor mit der elektrischen Energie, mit welcher der Aktor versorgt wird, betrieben wird, um die Fahrt des Anhängers zu stabilisieren. Dabei ist das Anschlusselement zumindest elektrisch und dabei zumindest mittelbar, insbesondere direkt, mit der zum Bereitstellen von elektrischer Energie ausgebildeten Energiequelle des Zugfahrzeugs verbindbar. Somit kann die von der Energiequelle des Fahrzeugs bereitgestellte elektrische Energie von der Energiequelle an beziehungsweise auf das Anschlusselement übertragen und schließlich von dem Anschlusselement bereitgestellt werden. Die von dem Anschlusselement bereitgestellte elektrische Energie kann von dem Anschlusselement an den Aktor übertragen werden, sodass der Aktor mittels der von der Energiequelle beziehungsweise von dem Anschlusselement bereitgestellten elektrischen Energie betreibbar ist. Dabei ist der Energiespeicher ein elektrischer Energiespeicher, sodass der Energiespeicher zum Speichern von elektrischer Energie ausgebildet ist. Dadurch kann der Aktor mittels des Energiespeichers mit in dem Energiespeicher gespeicherter elektrischer Energie versorgt werden, wodurch der Aktor mittels der in dem Energiespeicher gespeicherten elektrischen Energie elektrisch betrieben werden kann. Hierdurch können beispielsweise unerwünschte beziehungsweise übermäßige Aufbaubewegungen des Anhängers besonders vorteilhaft vermieden werden, sodass ein besonders sicherer Betrieb gewährleistet werden kann.

Eine weitere Ausführungsform zeichnet sich dadurch aus, dass der Energiespeicher dazu ausgebildet ist, eine für zumindest einen Stabilisierungsvorgang des Aktors ausreichende Menge an elektrischer Energie zu speichern. Somit ist beispielsweise der Energiespeicher hinsichtlich seiner Speicherkapazität zum Speichern von elektrischer Energie zumindest derart dimensioniert, dass der Aktor wenigstens einen Stabilisierungsvorgang zum Stabilisieren der Fahrt des Anhängers durchführen kann.

Ferner hat es sich als besonders vorteilhaft gezeigt, wenn der Energiespeicher dazu ausgebildet ist, eine solche Menge an elektrischer Energie zu speichern, die ausreicht, um eine Elektronik der Anhängerstabilisierungseinrichtung dauerhaft während einer Zeitspanne zu betreiben, während welcher eine durch die Energiequelle bewirkte Versorgung der Anhängerstabilisierungseinrichtung mit Energie unterbleibt oder gegenüber dem Normalzustand zumindest reduziert ist.

Bei einer besonders vorteilhaften Ausführungsform der Erfindung weist der Energiespeicher wenigstens eine Batterie beziehungsweise wenigstens eine Batteriezelle und/oder wenigstens einen Akkumulator und/oder wenigstens einen Kondensator, insbesondere wenigstens einen Superkondensator, zum Speichern der elektrischen Energie auf. Dadurch kann der Aktor in kurzer Zeit mit einer besonders hohen Menge an Energie, die im Energiespeicher gespeichert ist, versorgt werden, sodass die Fahrt des Anhängers besonders gut stabilisiert werden kann.

In weiterer Ausgestaltung der Erfindung ist der Energiespeicher über das Anschlusselement mit zumindest einem Teil der von der Energiequelle bereitgestellten Energie versorgbar. Dies bedeutet, dass der Energiespeicher mit zumindest einem Teil der von dem Anschlusselement bereitgestellten Energie versorgt werden kann, sodass der Energiespeicher mit der von der Energiequelle beziehungsweise mit der von dem Anschlusselement bereitgestellten Energie aufgeladen werden kann, in dem zumindest der Teil der von der Energiequelle beziehungsweise von dem Anschlusselement bereitgestellten Energie in dem Energiespeicher gespeichert wird. So ist es beispielsweise vorzugsweise vorgesehen, dass der Energiespeicher als wieder aufladbarer Energiespeicher ausgebildet ist, der insbesondere dann mit Energie geladen beziehungsweise aufgeladen werden kann, wenn die Lichtmaschine nach ihrem Wegschalten wieder zugeschaltet wird beziehungsweise wenn die Energieversorgung des Anhängers fahrzeugseitig wieder aktiviert wird. Hierdurch kann beispielsweise der Energiespeicher während einer Fahrt eines den Anhänger und das mit dem Anhänger gelenkig gekoppelte Zugfahrzeug umfassenden Gespanns geladen werden, sodass ein besonders sicherer Betrieb während der Fahrt gewährleistet werden kann.

Bei einer weiteren Ausführungsform der Erfindung umfasst die Anhängerstabilisierungseinrichtung eine eigene elektronische Recheneinrichtung, welche dazu ausgebildet ist, den Energiespeicher, insbesondere das Aufladen des Energiespeichers, zu steuern und/oder zu regeln und/oder zu überwachen. Die elektronische Recheneinrichtung ist somit Bestandteil der Anhängerstabilisierungseinrichtung beziehungsweise des Anhängers, und nicht etwa des Zugfahrzeugs, sodass ein besonders vorteilhafter Betrieb realisierbar ist.

Als besonders vorteilhaft hat es sich gezeigt, wenn die eigene elektronische Recheneinrichtung der Anhängerstabilisierungseinrichtung Bestandteil des Energiespeichers ist, sodass der Energiespeicher mit seiner eigenen elektronischen Recheneinrichtung zum Steuern und/oder Regeln und/oder Überwachen des Energiespeichers, insbesondere des Aufladens, ausgestattet ist. Ist der Energiespeicher beispielsweise als elektrischer Energiespeicher ausgebildet, so wird die elektronische Recheneinrichtung beispielsweise auch als Batteriemanagementsystem (BMS) bezeichnet. Mittels der elektronischen Recheneinrichtung der Anhängerstabilisierungseinrichtung, insbesondere des Energiespeichers, kann beispielsweise ein Zellenschutz, eine Ladekontrolle, ein Lademanagement, eine Bestimmung des Ladezustands, eine Bestimmung der Zellgesundheit auf Alter, Restkapazität, Innenwiderstand, ein Balancing von Speicherzellen des Energiespeichers, eine Temperaturüberwachung und ein Anpassen der Ladeschlussspannung, eine Kommunikation sowie eine Aufzeichnung der Historie und eine Authentifizierung und Identifizierung durchgeführt werden.

Die eigene elektronische Recheneinrichtung der Anhängerstabilisierung, insbesondere des Energiespeichers, wird im Folgenden auch als erste elektronische Recheneinrichtung bezeichnet. Dabei ist es denkbar, dass die Anhängerstabilisierungseinrichtung wenigstens eine zweite elektronische Recheneinrichtung aufweist, wobei die erste elektronische Recheneinrichtung und die zweite elektronische Recheneinrichtung beispielsweise voneinander separat ausgebildete Einzelkomponenten sind. Mit anderen Worten ist beispielsweise die zweite elektronische Recheneinrichtung zwar Bestandteil der Anhängerstabilisierungseinrichtung, jedoch ist die zweite elektronische Recheneinrichtung beispielsweise eine separat von der ersten elektronischen Recheneinrichtung ausgebildete, zusätzlich dazu vorgesehene und bezüglich der ersten elektronischen Recheneinrichtung externe Komponente. Somit sind die elektronischen Recheneinrichtungen beispielsweise separate und jeweils eigenständige sowie voneinander unabhängige und insbesondere relativ zueinander bewegbare Komponenten, welche jedoch in vollständig hergestelltem Zustand der Anhängerstabilisierungseinrichtung zumindest mittelbar, insbesondere direkt, mechanisch miteinander verbunden sein können.

Als besonders vorteilhaft hat es sich jedoch gezeigt, wenn die erste elektronische Recheneinrichtung auch dazu ausgebildet ist, den Aktor anzusteuern und dadurch den Aktor zu steuern und/oder zu regeln. Somit ist beispielsweise das Batteriemanagementsystem des Energiespeichers in die Steuer- und/oder Regelungselektronik eines Stabilisierungsgeräts integriert. Das Stabilisierungsgerät ist eine elektronische Recheneinheit, welche auch als Steuergerät bezeichnet wird. Mittels des Steuergeräts kann beispielsweise der Aktor angesteuert und dadurch geregelt und/oder gesteuert werden. Die erste elektronische Recheneinrichtung ist vorzugsweise eine eigenständige, für sich abgeschlossene elektronische Recheneinheit beziehungsweise ein Steuergerät, welches beispielsweise genau ein Gehäuse aufweist und/oder als ein eigenständiges Modul ausgebildet ist. Mittels der elektronischen Recheneinrichtung kann vorzugsweise sowohl der Aktor gesteuert und/oder geregelt als auch der Energiespeicher, insbesondere dessen Aufladen, gesteuert und/oder geregelt und/oder überwacht werden. Hierdurch können beispielsweise Rechenzeiten besonders gering gehalten werden, sodass ein besonders sicherer Betrieb des Anhängers gewährleistet werden kann.

Eine weitere Ausführungsform zeichnet sich dadurch aus, dass ein zum Steuern und/oder Regeln und/oder Überwachen des Energiespeichers, insbesondere des Aufladens des Energiespeichers, ausgebildetes erstes Modul und ein zum Steuern und/oder Regeln des Aktors ausgebildetes zweites Moduls vorgesehen sind. Das erste Modul ist beispielsweise die erste elektronische Recheneinrichtung, und das zweite Modul ist beispielsweise die zweite elektronische Recheneinrichtung. Alternativ ist es denkbar, dass das erste Modul und das zweite Modul Bestandteile beziehungsweise Module der ersten elektronischen Recheneinrichtung und somit beispielsweise in die erste elektronische Recheneinrichtung integriert beziehungsweise zu der ersten elektronischen Recheneinrichtung zusammengefasst sind. Somit sind beispielsweise das erste Modul und das zweite Modul jeweilige Funktionsmodule der ersten elektronischen Recheneinrichtung, mittels welcher beispielsweise sowohl der Aktor betrieben, das heißt gesteuert und/oder geregelt, als auch der Energiespeicher, insbesondere dessen Aufladen, gesteuert und/oder geregelt und/oder überwacht werden kann. Dabei ist es vorgesehen, dass die Module dazu ausgebildet sind, miteinander zu kommunizieren und dadurch Daten untereinander auszutauschen. Auf diese Weise kann beispielsweise vermieden werden, dass etwa bei einem geringen Ladezustand des als Energiepuffer verwendeten Energiespeichers unnötige und/oder energieverzehrende Aktionen beziehungsweise Betriebe des Aktors durchgeführt werden.

Unter einem geringen Ladezustand ist zu verstehen, dass eine nur geringe Menge an Energie, insbesondere an elektrischer Energie, in dem Energiespeicher gespeichert ist. Somit kann in dem Energiespeicher gespeicherte Energie für wichtige Stabilisierungsvorgänge gespart werden, sodass ein besonders sicherer Betrieb gewährleistet werden kann. Insbesondere ist es denkbar, dass ein Selbsttest durchgeführt werden kann und/oder es kann die - in der Stabilisierungseinrichtung vorhandene - Verbraucherabschaltung sämtliche oder wenigstens einen übrigen Verbraucher im Anhänger frühzeitig wegschalten, um eine optimale und schnelle Aufladung des Energiespeichers zu gewährleisten beziehungsweise um ein übermäßiges Entladen des Energiespeichers zu vermeiden.

Bein einer weiteren Ausführungsform ist die erste elektronische Recheneinrichtung und/oder das erste Modul dazu ausgebildet ist, eine in dem Energiespeicher gespeicherte Menge der Energie zu ermitteln. Mit anderen Worten ist es hierbei vorgesehen, mittels der ersten elektronischen Recheneinrichtung beziehungsweise mittels des ersten Moduls eine noch in dem Energiespeicher gespeicherte und somit verbleibende Menge der Energie zu ermitteln. Die in dem Energiespeicher noch gespeicherte beziehungsweise verbleibende Menge wird auch als Restmenge, Restkapazität oder Ladezustand bezeichnet.

Als weiterhin besonders vorteilhaft hat es sich gezeigt, wenn die erste elektronische Recheneinrichtung beziehungsweise das erste Modul dazu ausgebildet ist, wenigstens ein die ermittelte Menge, das heißt die Restkapazität charakterisierendes, insbesondere elektrisches, Signal bereitzustellen. Die erste elektronische Recheneinrichtung kann beispielsweise die zuvor genannte Elektronik umfassen.

Das Signal kann beispielsweise von wenigstens einem Gerät empfangen werden oder in Abhängigkeit von dem Hinweiswert Signal kann eine Bereitstellung eines Übermittlungssignals bewirkt werden, welches von dem Gerät empfangen werden kann. In der Folge kann das Gerät beispielsweise wenigstens einen die ermittelte Restkapazität charakterisierenden Hinweiswert und/oder wenigstens ein die ermittelte Restkapazität charakterisierendes Bild und/oder wenigstens ein die ermittelte Restkapazität charakterisierendes Symbol anzeigen. Mit anderen Worten kann das Gerät wenigstens ein Hinweissignal ausgeben, welches beispielsweise optisch und/oder haptisch und/oder akustisch von einer Person wahrgenommen werden kann. Das Hinweissignal kann das zuvor genannte Bild beziehungsweise Symbol und/oder den Hinweiswert umfassen. Das Gerät umfasst beispielsweise einen elektronischen Bildschirm, auf welchem das Hinweissignal anzeigt werden kann. Das Gerät ist beispielsweise eine mobiles Endgerät, insbesondere ein mobiles Funkgerät wie beispielsweise ein Handy, ein Smartphone, ein Tablet-PC, ein PC oder dergleichen. Insbesondere kann das Gerät ein elektronisches Gerät sein. Das Gerät ist beispielsweise ein mobiles Datenerfassungsgerät.

Das Signal wird insbesondere dann bereitgestellt beziehungsweise das Hinweissignal wird insbesondere dann ausgegeben, wenn ermittelt wird, dass die Restkapazität nicht mehr ausreicht, um einen Stabilisierungsvorgang mittels des Aktors durchführen zu können und/oder die Elektronik dauerhaft betreiben zu können. Anhand des Hinweissignals kann die Person beispielsweise darauf aufmerksam gemacht werden, dass die Anhängerstabilisierungseinrichtung in zurzeit nicht mehr betriebsbereit ist. Das Gerät kann beispielsweise das Hinweissignal beziehungsweise die Restkapazität oder den Ladezustand permanent und/oder dann ausgeben, wenn die Restkapazität beziehungsweise der Ladezustand unter einen vorgebbaren oder vorgegebenen Schwellenwert sinkt.

Als weiterhin besonders vorteilhaft hat es sich gezeigt, wenn der Aktor und der Energiespeicher als separat voneinander ausgebildete und elektrisch und mechanisch, insbesondere reversibel lösbar, zumindest mittelbar, insbesondere direkt, miteinander verbundene oder verbindbare Komponenten ausgebildet sind. Der Energiespeicher kann somit als Nachrüstlösung ausgestaltet werden, die in bereits bestehende, insbesondere elektrische, Stabilisierungseinrichtungen eingesetzt werden kann, um dadurch beispielsweise bereits bestehende, herkömmliche Stabilisierungseinrichtungen zu der erfindungsgemäßen Anhängerstabilisierungseinrichtung weiterzubilden. Der Energiespeicher ist somit ein eigenes, bezüglich des Aktors externes Energiespeichermodul, welches beispielsweise in eine elektrische Zuleitung, über welche der Aktor mit Energie versorgt werden kann, eingebunden werden kann. Ist beispielsweise der Energiespeicher mit der eigenen elektronischen Recheneinrichtung, das heißt mit der ersten elektronischen Recheneinrichtung ausgestattet, so ist die erste elektronische Recheneinrichtung beziehungsweise das Batteriemanagementsystem in das genannte Energiespeichermodul integriert beziehungsweise in diesem Energiespeichermodul enthalten. Dadurch kann der Energiespeicher auf besonders einfache Weise in bereits bestehende Systeme integriert werden.

In weiterer Ausgestaltung der Erfindung weist der Energiespeicher, insbesondere dessen, insbesondere erste, elektronische Recheneinrichtung, wenigstens einen Anschluss aufweist, über welchen der Energiespeicher, insbesondere dessen, insbesondere erste, elektronische Recheneinrichtung, mit einem Datenbus verbindbar ist, sodass der Energiespeicher, insbesondere dessen elektronische Recheneinrichtung, dazu ausgebildet ist, über den Anschluss Daten zu senden und/oder über den Anschluss von wenigstens einem weiteren elektronischen Gerät über den Datenbus bereitgestellte Daten zu empfangen. Der Datenbus wird auch als Bussystem bezeichnet, sodass beispielsweise der Energiespeicher, insbesondere dessen elektronische Recheneinrichtung, mit anderen Komponenten im Bussystem des Anhängers kommunizieren kann. Das Bussystem ist beispielsweise ein CI-Bus.

Alternativ oder zusätzlich ist es vorgesehen, dass der Energiespeicher, insbesondere dessen elektronische Recheneinrichtung, wenigstens ein Sende- und/oder Empfangselement aufweist, sodass der Energiespeicher, insbesondere dessen elektronische Recheneinrichtung, dazu ausgebildet ist, über das Sende- und/oder Empfangselement Daten an ein bezüglich des Anhängers beziehungsweise an ein bezüglich der Anhängerstabilisierungseinrichtung externes mobiles Endgerät, insbesondere kabellos, beispielsweise per Funk, zu senden und/oder von einem bezüglich des Anhängers, insbesondere bezüglich der Anhängerstabilisierungseinrichtung, externen mobilen Endgerät bereitgestellte Daten, insbesondere kabellos und somit beispielsweise über Funk, zu empfangen. Das externe mobile Endgerät ist beispielsweise ein Tablet-PC, ein Smartphone, ein Handy oder ein anderes mobiles Endgerät, insbesondere ein mobiles Kommunikationsendgerät. Ferner kann das mobile Endgerät eine Fernanzeige sein. Der Energiespeicher, insbesondere dessen, insbesondere erste, elektronische Recheneinrichtung ist somit beispielsweise dazu ausgebildet, mit dem mobilen, beispielsweise als mobiles Datenerfassungsgerät ausgebildeten mobilen Endgerät uni-oder bidirektional Daten auszutauschen. Dieses Austauschen von Daten kann kabelgebunden oder aber kabellos, beziehungsweise drahtlos erfolgen. Das Sende-und/oder Empfangselement kann ein von dem Anschluss unterschiedliches, zusätzlich dazu vorgesehenes Bauelement sein, oder das Sende- und/oder Empfangselement ist der zuvor genannte Anschluss beziehungsweise umgekehrt.

In weiterer Ausgestaltung der Erfindung ist der Energiespeicher dazu ausgebildet ist, ausschließlich den wenigstens einen Aktor oder mehrere Aktoren oder alle Aktoren der Anhängerstabilisierungseinrichtung mit in dem Energiespeicher gespeicherter Energie zu versorgen. Dieser Ausführungsform liegt die Erkenntnis zu Grunde, dass herkömmliche Anhängerstabilisierungseinrichtungen beim Auslösen, das heißt bei einem Stabilisierungsvorgang die übrigen Verbraucher des Anhängers abschalten beziehungsweise wegschalten, sodass diese keine oder nur sehr geringe Mengen an elektrischer Energie verbrauchen. Dabei ist es vorzugsweise vorgesehen, dass der als Energiepuffer verwendete Energiespeicher ausschließlich für den Betrieb der Anhängerstabilisierungseinrichtung und nicht für andere, übrige Verbraucher des Anhängers genutzt wird. Dadurch kann der Aktor mit einer hinreichenden Menge an Energie versorgt werden, sodass ein besonders sicherer Betrieb gewährleistet werden kann.

Als weiterhin vorteilhaft hat es sich gezeigt, wenn der Energiespeicher als mechanischer Energiespeicher ausgebildet ist, welcher wenigstens eine Feder zum Speichern von mechanischer Energie aufweist. Die Feder kann als Schraubenfeder, Spiralfeder, Tellerfeder, Torsionsfeder oder als andere Feder ausgebildet sein. Insbesondere ist es denkbar, dass der Energiespeicher eine Kombination als elektrischem Energiespeicher und mechanischem Energiespeicher ist, sodass mittels des Energiespeichers sowohl elektrische als auch mechanische Energie gespeichert werden kann. Die Speicherung der mechanischen Energie erfolgt beispielsweise über die wenigstens eine zuvor beschriebene Feder. Alternativ oder zusätzlich ist es denkbar, dass der Energiespeicher, insbesondere der mechanische Energiespeicher, als Druckluftspeicher zum Speichern von Druckluft ausgebildet ist. Somit kann der Aktor beispielsweise mittels in dem Energiespeicher gespeicherter mechanischer Energie, insbesondere mittels mit im Druckluftspeicher gespeicherter Druckluft, betrieben werden, um die Fahrt des Anhängers unter Nutzung von mechanischer Energie beziehungsweise Druckluft zu stabilisieren.

Durch entsprechende Dimensionierung des beispielsweise als elektrischer Energiespeicher ausgebildeten Energiespeichers kann zudem der Weiterbetrieb zumindest eines weiteren, von dem Aktor unterschiedlichen und beispielsweise bezüglich der Anhängerstabilisierungseinrichtung unterschiedlichen Verbrauchers innerhalb des Anhängers sichergestellt werden. Das zuvor beschriebene Wegschalten der Lichtmaschine beziehungsweise das vollständige, fahrzeugseitige Abschalten der Energieversorgung des Anhängers kann dazu führen, dass von der Anhängerstabilisierungseinrichtung unterschiedliche, zusätzlich dazu vorgesehene elektrische Geräte in ihrem Betrieb beeinträchtigt werden. Hier ist insbesondere ein Kühlschrank zu nennen, dessen Betrieb beeinträchtigt werden kann. Eine solche Beeinträchtigung kann nun mittels der erfindungsgemäßen Anhängerstabilisierungseinrichtung vermieden werden.

Durch die zuvor beschriebene Kommunikation des ersten Moduls mit dem zweiten Modul kann der Betrieb des Aktors auf die Kapazität des Energiespeichers beziehungsweise auf eine noch im Energiespeicher gespeicherte Menge an Energie abgestimmt werden, sodass ein besonders sicherer Betrieb gewährleistet werden kann. Dabei ist es denkbar, dass zumindest das erste Modul in den Energiespeicher integriert beziehungsweise Bestandteil des Energiespeichers ist. Bezüglich des Aktors ist der Energiespeicher vorzugsweise ein externer Energiespeicher, welcher vorzugsweise ausschließlich dazu genutzt wird, um den Betrieb der Anhängerstabilisierungseinrichtung aufrecht zu erhalten. Somit ist es vorzugsweise vorgesehen, dass die in dem Energiespeicher gespeicherte elektrische Energie ausschließlich zum Betreiben der Anhängerstabilisierungseinrichtung und nicht etwa auch zum Betreiben von bezüglich der Anhängerstabilisierungseinrichtung externen Verbrauchern genutzt wird.

Eine weitere Ausführungsform sieht eine elektronische Auswerteeinheit vor, welche dazu ausgebildet ist, wenigstens ein von zumindest einem Sensor bereitgestelltes, insbesondere elektrisches, Signal zu empfangen, anhand des Signals eine Fahrt des Anhängers, insbesondere einen Beginn einer Fahrt des Anhängers, zu ermitteln und infolge des Ermittelns der Fahrt eine Überführung der Anhängerstabilisierungseinrichtung aus einem Ruhezustand in einen Aktivzustand zu bewirken. Die Auswerteeinheit kann Bestandteil der ersten und/oder zweiten elektronischen Recheneinrichtung und/oder Bestandteil zumindest eines der Module sein. Ferner ist es denkbar, dass die Auswerteeinheit Bestandteil der Elektronik, insbesondere der Regel- und/oder Steuerungselektronik ist.

Ferner ist es denkbar, dass die Auswerteinheit eine von der ersten elektronischen Recheneinrichtung und von der zweiten elektronischen Recheneinrichtung separate, zusätzlich dazu vorgesehene dritte elektronische Recheneinrichtung ist, welche mit der ersten und/oder zweiten Recheneinheit und/oder mit dem ersten und/oder mit dem zweiten Modul, insbesondere unidirektional und/oder bidirektional, kommunizieren, insbesondere Daten austauschen beziehungsweise Daten übermitteln, kann.

Die Auswerteeinheit kann Bestandteil der Elektronik, insbesondere der Steuer-und/der Regelungselektronik sein, oder die Auswerteeinheit ist separat von der Elektronik ausgebildet und zusätzlich vorgesehen. Das Überführen von dem Ruhezustand in den Aktivzustand wird auch als Aufwecken bezeichnet, sodass beispielsweise die erste und/oder die zweite Recheneinrichtung und/oder das erste und/oder zweite Module und/oder die Elektronik, insbesondere die Steuer- und/oder Regelelektronik, mittels der Auswerteeinheit aufgeweckt werden kann.

Dabei hat es sich als besonders vorteilhaft gezeigt, wenn die Anhängerstabilisierungseinrichtung den Sensor aufweist. Mit anderen Worten ist der Sensor beispielsweise Bestandteil der Anhängerstabilisierungseinrichtung. Dabei ist es möglich, die Anhängerstabilisierungseinrichtung insbesondere auch dann aufzuwecken, während eine mittels der Energiequelle des Zugfahrzeugs bewirkte Versorgung der Anhängerstabilisierungseinrichtung mit Energie unterbleibt beziehungsweise reduziert ist. Mit anderen Worten kann die Anhängerstabilisierungseinrichtung, insbesondere unabhängig von der Energiequelle des Zugfahrzeugs, aufgeweckt werden, ohne dass das Aufwecken der Anhängerstabilisierungseinrichtung durch die Energiequelle beziehungsweise mittels des Zugfahrzeugs erfolgt.

Eine weitere Ausführungsform zeichnet sich dadurch aus, dass der Sensor als Beschleunigungssensor, Geschwindigkeitssensor, Impulssensor, Schwingungssensor und/oder Gierratensensor ausgebildet ist.

Um beispielsweise den Energieverbrauch der einfach auch als Stabilisierungseinrichtung bezeichneten Anhängerstabilisierungseinrichtung nach Beendigung oder Unterbrechung einer Fahrt und bei gleichzeitig weiter bestehender elektrischer Verbindung zwischen dem Zugfahrzeug und dem Anhänger, indem beispielsweise ein 13-Pol-Stecker, insbesondere des Anhängers, weiter, insbesondere mit dem Zugfahrzeug, verbunden ist, gering halten beziehungsweise gegenüber herkömmlichen Lösungen reduzieren zu können, fallen Stabilisierungseinrichtung beziehungsweise fällt die Anhängerstabilisierungseinrichtung, insbesondere ihre beispielsweise durch die erste elektronische Recheneinrichtung gebildete Regel- und/oder Steuerungselektronik, nach Ablauf einer definierten Zeitspanne nach Fahrtende in den Ruhezustand, selbst wenn die Versorgungsspannung an der Stabilisierungseinrichtung noch anliegt. Dabei wird das Fahrtende durch die Regel- und/oder Steuerungselektronik der Stabilisierungseinrichtung erkannt, indem beispielsweise Daten von wenigstens einem oder mehreren Sensoren, insbesondere Beschleunigungs-, Geschwindigkeits-, Impuls-, Schwingungs-, und/oder Gierratenaufnehmern und/oder anderen Sensoren, ausgewertet werden, insbesondere dadurch, dass die Regel- und/oder Steuerungselektronik wenigstens ein von dem jeweiligen Sensor bereitgestelltes Signal empfängt. Dabei kann der Sensor in die Regel- und/oder Steuerungselektronik der Stabilisierungseinrichtung integriert sein oder separat davon ausgebildete beziehungsweise angeordnet sein und mit der Regel- und/oder Steuerungselektronik kabelgebunden und/oder kabellos und/oder uni- oder bidirektional kommunizieren. Der jeweilige Sensor kann ferner Bestandteil einer Regel- und/oder Steuerungselektronik des Energiespeichers sein. Mit anderen Worten kann der Sensor Bestandteil des Batteriemanagementsystems sein. Dies bedeutet beispielsweise, dass das Batteriemanagementsystem eine, insbesondere dem Energiespeicher eigene, Regel- und/oder Steuerungselektronik umfasst oder bildet.

Insbesondere ist es denkbar, dass die Auswerteeinheit dazu ausgebildet ist, nach einem Ende oder einer Unterbrechung einer Fahrt und bei Beginn einer Weiterfahrt der Regel- und/oder Steuerungselektronik der Stabilisierungseinrichtung zu signalisieren, dass der Ruhezustand zu beenden ist, und dies insbesondere auch dann, wenn die Anhängerenergieversorgung durch das Zugfahrzeug weiterhin komplett abgeschaltet verbleibt. Somit wacht die Regel- und/oder Steuerungselektronik auf, das heißt die Regel- und/oder Steuerungselektronik kommt von dem Ruhezustand in den Aktivzustand, während beziehungsweise obwohl die durch die Energiequelle bewirkte Versorgung der Anhängerstabilisierungseinrichtung mit Energie unterbleibt oder gegenüber dem Normalzustand zumindest reduziert ist.

Das Aufwecken der Stabilisierungseinrichtung erfolgt vorzugsweise dadurch, dass eine Versorgung der Regel- und/oder Steuerungselektronik beziehungsweise der ersten und/oder zweiten elektronischen Recheneinrichtung und/oder des ersten und/oder zweiten Moduls mit Energie, insbesondere aus dem Energiespeicher, bewirkt wird.

Ein zweiter Aspekt der Erfindung betrifft einen Anhänger, insbesondere einen Wohnwagen, einen Caravan, einen Bootsanhänger, einen Verkaufswagen, einen Transportanhänger oder einen Autotransportanhänger. Der Anhänger gemäß dem zweiten Aspekt der Erfindung umfasst eine erfindungsgemäße Anhängerstabilisierungseinrichtung gemäß dem ersten Aspekt der Erfindung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Da die Anhängerstabilisierungseinrichtung und somit dessen als Energiepuffer verwendeter Energiespeicher Bestandteile des Anhängers sind, kann die Anhängerstabilisierungseinrichtung des Anhängers zumindest im Wesentlichen unabhängig von einer externen Energieversorgung, beispielsweise eines Zugfahrzeugs zum Bewegen des Anhängers, erfolgen, sodass insbesondere auch dann ein besonders sicherer Betrieb des Anhängers gewährleistet werden kann, wenn eine externe Energieversorgung des Anhängers und somit der Anhängerstabilisierungseinrichtung reduziert oder abgeschaltet wird.
Ist der Energiespeicher beispielsweise als mechanischer Energiespeicher, insbesondere als Druckluftspeicher, ausgebildet, so ist vorzugsweise wenigstens ein Lageaufnehmer und/oder wenigstens ein Druckaufnehmer vorgesehen, mittels welchem wenigstens eine einen Zustand des Energiespeichers charakterisierender Größe erfassbar ist. Der Lageaufnehmer beziehungsweise Druckaufnehmer stellt beispielsweise wenigstens ein, insbesondere elektrisches, Zustandssignal bereit, welches beispielsweise von wenigstens einem der Module und/oder von wenigstens einer der Recheneinrichtungen und/oder von der Elektronik empfangen werden kann. Anhand des Zustandssignals kann der Zustand des Energiespeichers ermittelt werden.

Weitere Vorteile, Merkmale und Einzelheiten der Erfindung ergeben sich aus der nachfolgenden Beschreibung bevorzugter Ausführungsbeispiele sowie anhand der Zeichnung Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische Perspektivansicht eines Anhängers, welcher eine erfindungsgemäße Anhängerstabilisierungseinrichtung gemäß einer ersten Ausführungsform aufweist;
- Fig. 2: ausschnittsweise eine weitere schematische Perspektivansicht des Anhängers;
- Fig. 3: eine schematische Perspektivansicht eines Energiespeichers der Anhängerstabilisierungseinrichtung gemäß der ersten Ausführungsform;
- Fig. 4: ausschnittsweise eine weitere schematische Perspektivansicht des Energiespeichers; und
- Fig. 5: eine schematische und geschnittene Seitenansicht eines Aktors der Anhängerstabilisierungseinrichtung gemäß einer zweiten Ausführungsform.

In den Fig. sind gleiche oder funktionsgleiche Elemente mit gleichen Bezugszeichen versehen.

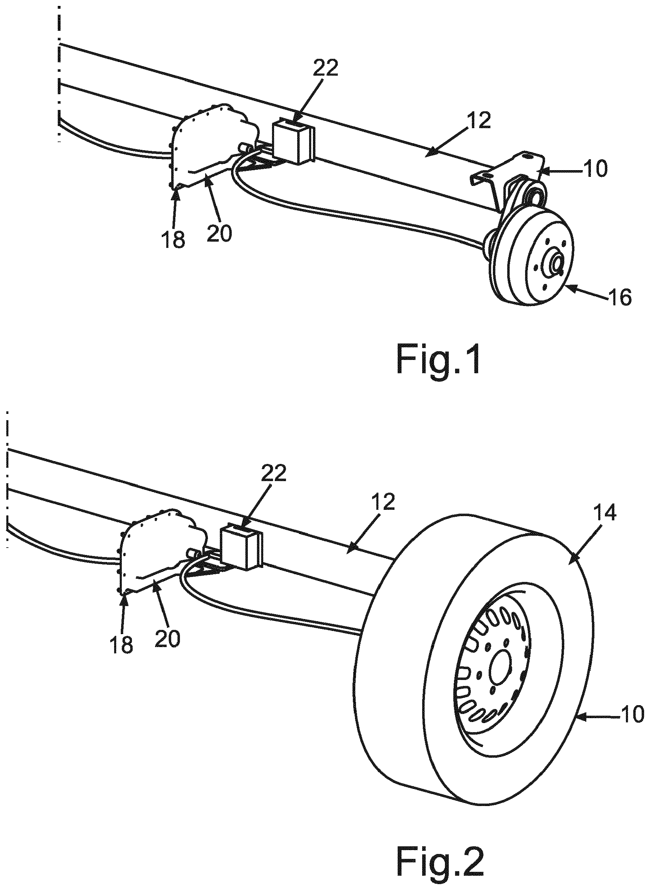

Fig. 1 und 2 zeigen jeweils ausschnittsweise ein einer schematischen Perspektivansicht einen Anhänger 10, welcher beispielsweise als ein Wohnwagen, ein Caravan, ein Bootsanhänger, ein Verkaufswagen, ein Transportanhänger oder ein Autotransportanhänger ausgebildet ist. Der Anhänger 10 umfasst einen in Fig. 1 und 2 teilweise erkennbaren Rahmen 12. Ferner umfasst der Anhänger 10 beispielsweise wenigstens einen in den Fig. nicht erkennbaren Aufbau, welcher an dem Rahmen 12 gehalten sein kann. Wie in Zusammenschau mit Fig. 2 erkennbar ist, sind an dem Rahmen 12 wenigstens zwei in Fahrzeugquerrichtung voneinander beabstandete Räder drehbar gehalten, von denen in Fig. 2 das in Vorwärtsfahrtrichtung linke und mit 14 bezeichnete Rad erkennbar ist. Der Anhänger 10 ist ein motorloses Fahrzeug, welches keinen Antriebsmotor aufweist und demzufolge nicht aus eigener Kraft angetrieben werden kann. Um den als motorloses Fahrzeug ausgebildeten Anhänger 10 zu bewegen, insbesondere zu ziehen ist ein, beispielsweise als Kraftwagen, insbesondere als Personenkraftwagen, ausgebildetes Zugfahrzeug erforderlich. Das Zugfahrzeug kann gelenkig mit dem Anhänger 10 gekoppelt werden, sodass der Anhänger 10 mittels des Zugfahrzeugs bewegt werden kann. Auf diese Weise ist es möglich, den Anhänger 10 entlang einer Fahrbahn zu bewegen und somit zu fahren. Der Anhänger 10 und das mit dem Anhänger 10 gebildete Zugfahrzeug bilden ein so genanntes Gespann, bei welchem der Anhänger 10 relativ zu dem Zugfahrzeug bewegbar ist und umgekehrt.

Aus Fig. 1 ist eine dem Rad 14 zugeordnete Bremseinrichtung 16 des Anhängers 10 erkennbar. Mittels der Bremseinrichtung 16 kann das Rad 14 hinsichtlich seiner Drehungen relativ zu dem Rahmen 12 verlangsamt und somit abgebremst werden, wodurch der Anhänger 10 insgesamt abgebremst werden kann. Die Bremseinrichtung 16 ist dabei beispielsweise Bestandteil einer Betriebsbremsanlage zum Abbremsen des Anhängers 10.

Das Zugfahrzeug weist beispielsweise eine insbesondere als Batterie ausgebildete Energiequelle auf, welche beispielsweise in einem Bordnetz des Fahrzeugs angeordnet ist. In der Batterie des Zugfahrzeugs kann elektrische Energie gespeichert werden. Die Batterie des Zugfahrzeugs kann die in ihr gespeicherte elektrische Energie bereitstellen und dadurch in das Bordnetz einspeisen. Da die Energiequelle Bestandteil des Zugfahrzeugs und nicht etwa Bestandteil des Anhängers ist, ist die Energiequelle eine bezüglich des Anhängers 10 externe, zusätzlich dazu vorgesehene Komponente.

Der Anhänger 10 weist eine Anhängerstabilisierungseinrichtung 18 auf, welche beispielsweise zumindest mittelbar an dem Rahmen 12 gehalten und Bestandteil des Anhängers 10 ist. Die Anhängerstabilisierungseinrichtung 18 wird auch einfach als Stabilisierungseinrichtung oder Stabilisierungssystem bezeichnet und ist vorliegend elektrisch, das heißt unter Nutzung von elektrischer Energie betreibbar. Dabei umfasst die Anhängerstabilisierungseinrichtung 18 wenigstens einen Aktor 20, mittels welchem unter Betreiben des Aktors 20 eine Fahrt des Anhängers 10 stabilisiert werden kann. Fig. 1 bis 4 zeigen eine erste Ausführungsform des Anhängers 10 und somit der Anhängerstabilisierungseinrichtung 18. Bei der ersten Ausführungsform ist die Anhängerstabilisierungseinrichtung 18 elektrisch betreibbar, sodass der Aktor 20 ein elektrisch betreibbarer Aktor ist. Dies bedeutet, dass der Aktor 20 unter Nutzung von elektrischer Energie beziehungsweise elektrischem Strom betrieben werden kann. Durch vorliegend elektrisches Betreiben des Aktors können beispielsweise unerwünschte beziehungsweise übermäßige, während einer Fahrt des Anhängers 10 relativ zu der Fahrbahn erfolgende Aufbaubewegungen des Anhängers 10 vermieden werden oder solchen Aufbaubewegungen kann mittels des Aktors 20 entgegengewirkt werden, indem der Aktor 20 elektrisch betrieben wird. Der Aktor 20 ist beispielsweise mit den Bremsen gekoppelt, sodass beispielsweise mittels des Aktors 20 durch elektrisches Betreiben des Aktors 20 Bremseingriffe durchgeführt werden können. Im Rahmen eines solchen, mittels des Aktors 20 bewirkbaren Bremseingriffs wird wenigstens eine der Bremsen mittels des Aktors 20 betätigt, wodurch das jeweilige, der jeweiligen Bremse zugeordnete Rad und somit der Anhänger 10 insgesamt gezielt abgebremst werden können. Hierdurch kann die Fahrt stabilisiert werden. Durch Stabilisieren der Fahrt kann beispielsweise ein unerwünschter Fahrzustand des Anhängers 10 vermieden werden beziehungsweise einem unerwünschten Fahrzustand des Anhängers 10 entgegengewirkt werden, sodass ein gewünschter Fahrzustand des Anhängers 10 herbeigeführt werden kann.

Der Aktor 20 und somit die Anhängerstabilisierungseinrichtung 18 weisen wenigstens ein in den Fig. nicht erkennbares Anschlusselement auf, welches zumindest mittelbar mit dem Bordnetz und somit mit der Energiequelle des Zugfahrzeugs zumindest elektrisch verbunden werden kann. Dadurch kann die von der Energiequelle über das Bordnetz bereitgestellte elektrische Energie auf das Anschlusselement übertragen und von dem Anschlusselement bereitgestellt werden. Die von dem Anschlusselement bereitgestellte elektrische Energie kann dem Aktor 20 zugeführt werden, sodass der Aktor 20 mit der von dem Anschlusselement bereitgestellten elektrischen Energie versorgt werden kann. Dadurch kann der Aktor mittels der elektrischen Energie, die von dem Anschlusselement bereitgestellt wird, betrieben werden.

Um nun insbesondere auch dann einen besonders sicheren Betrieb des Anhängers 10 gewährleisten zu können, wenn die Energieversorgung der Anhängerstabilisierungseinrichtung 18 fahrzeugseitig gegenüber einem Normalbetriebszustand reduziert oder gar deaktiviert beziehungsweise abgeschaltet wird, umfassen die Anhängerstabilisierungseinrichtung 18 und somit der Anhänger 10 wenigstens einen eigenen, zum Speichern von elektrischer Energie ausgebildeten Energiespeicher 22. Der Energiespeicher 22 ist zumindest mittelbar, insbesondere direkt, an dem Rahmen 12 gehalten. Dabei ist der Energiespeicher 22 ein Bestandteil der Anhängerstabilisierungseinrichtung 18 und somit des Anhängers 10. Der Energiespeicher 22 kann als Energiepuffer genutzt werden, um auch dann, wenn die Energieversorgung der Anhängerstabilisierungseinrichtung 18 reduziert oder abgeschaltet wird, den Aktor 20 weiter mit elektrischer Energie versorgen zu können.

Der Energiespeicher 22 ist dabei mit zumindest einem Teil der von dem Anschlusselement bereitgestellten elektrischen Energie versorgbar, sodass zumindest der Teil der von dem Anschlusselement bereitgestellten elektrischen Energie in dem Energiespeicher 22 gespeichert werden kann. Hierdurch kann der Energiespeicher 22 aufgeladen werden. Mit anderen Worten kann der Energiespeicher 22 über das Anschlusselement mit von der Energiequelle des Zugfahrzeugs bereitgestellter elektrischer Energie aufgeladen werden, sodass beispielsweise der Energiespeicher 22 besonders einfach und komfortabel während der Fahrt des Gespanns aufgeladen werden kann.

Bei der in Fig. 1 bis 4 gezeigten ersten Ausführungsform sind der Aktor 20 und der Energiespeicher 22 als separat voneinander ausgebildete Komponenten ausgebildet, welche zumindest mittelbar mechanisch miteinander verbunden und dadurch aneinander gehalten sind. Diese zumindest mittelbare mechanische Verbindung zwischen den Komponenten ist bei der ersten Ausführungsform derart realisiert, dass der Aktor 20 und der Energiespeicher 22 jeweils unabhängig voneinander an dem Rahmen 12 gehalten sind, sodass die Komponenten über den Rahmen 12 mechanisch miteinander verbunden sind. Unter dem Merkmal, dass die Komponenten unabhängig voneinander an dem Rahmen 12 gehalten sind, ist zu verstehen, dass die jeweilige Komponente von dem Rahmen 12 gelöst werden kann, ohne dabei die jeweils andere Komponente von dem Rahmen 12 lösen zu müssen. Hierdurch ist der Energiespeicher 22 beispielsweise als Nachrüstlösung ausgebildet, welche in bereits bestehende Systeme integriert werden kann.

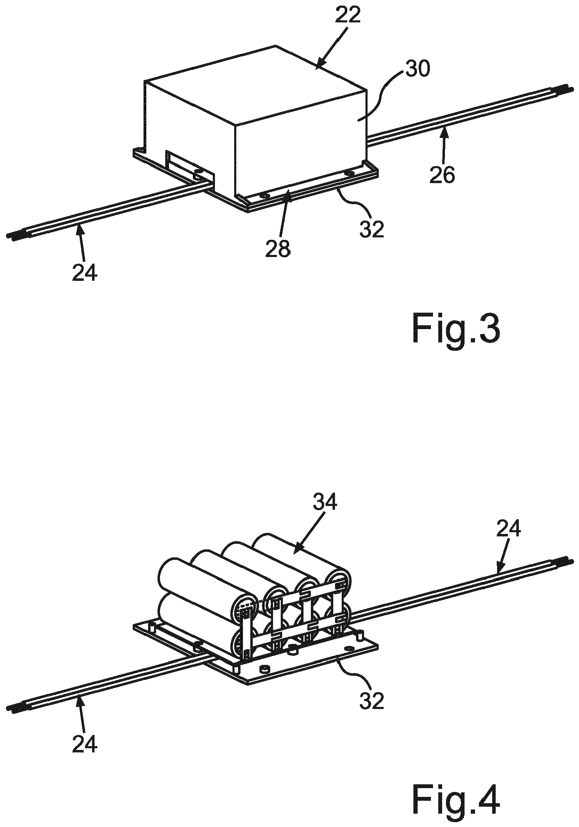

Fig. 3 zeigt den Energiespeicher 22 in einer schematischen Perspektivansicht. Der Energiespeicher 22 weist dabei beispielsweise eine Zuleitung 24 auf, über welche die von dem Anschlusselement bereitgestellte elektrische Energie dem Energiespeicher 22 zugeführt und in dem Energiespeicher 22 gespeichert werden kann. Ferner weist der Energiespeicher 22 beispielsweise eine Ableitung 26 auf, über welcher der Energiespeicher 22 die in ihm gespeicherte elektrische Energie bereitstellen kann.

Somit kann beispielsweise der Aktor 20 über die Ableitung 26 mit der in dem Energiespeicher 22 gespeicherten elektrischen Energie versorgt werden.

Aus Fig. 3 und 4 ist besonders gut erkennbar, dass der Energiespeicher 22 ein Gehäuse 28 aufweist. Das Gehäuse 28 ist beispielsweise mehrteilig ausgebildet und umfasst wenigstens zwei separat voneinander ausgebildete und miteinander verbundene Gehäuseelemente 30 und 32. Die Gehäuseelemente 30 und 32 begrenzen einen Aufnahmeraum, in welchem aus Fig. 4 erkennbare Speicherzellen 34 des Energiespeichers 22 aufgenommen sind. Mittels der Speicherzellen 34 kann die elektrische Energie gespeichert werden. Die jeweilige Speicherzelle 34 ist beispielsweise als Batterie- oder Akkumulatorzelle ausgebildet. Die Speicherzellen 34 sind jeweilige Einzelzellen, welche beispielsweise elektrisch miteinander verbunden sind. Hierdurch kann der Energiespeicher 22 eine besonders hohe elektrische Spannung bereitstellen, mit welcher der Aktor 20 versorgt werden kann. Beispielsweise sind die Speicherzellen 34 an dem Gehäuseelement 32 gehalten.

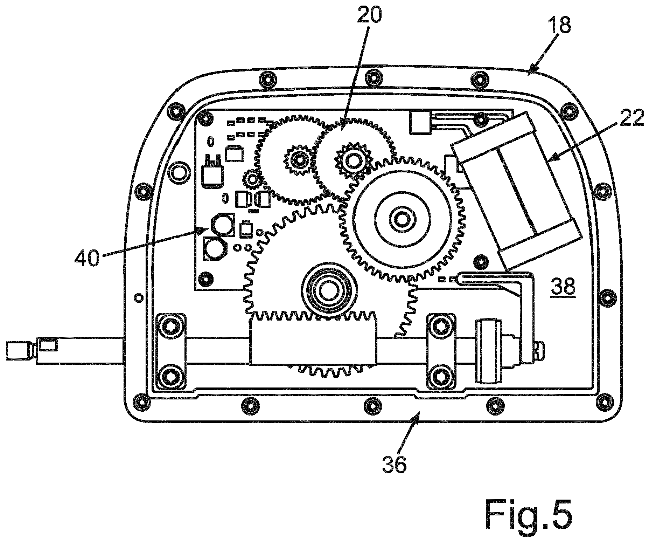

Fig. 5 zeigt eine zweite Ausführungsform der Anhängerstabilisierungseinrichtung 18 und somit des Anhängers 10 und des Aktors 20. Bei der zweiten Ausführungsform ist der Energiespeicher 22 in den Aktor 20 integriert. Dies bedeutet, dass der Aktor 20 und der Energiespeicher 22 in einem dem Aktor 20 und dem Energiespeicher 22 gemeinsamen Gehäuse 36 der Anhängerstabilisierungseinrichtung 18 aufgenommen sind. Das Gehäuse 36 begrenzt einen Aufnahmeraum 38, in welchem sowohl der Energiespeicher 22 als auch der Aktor 20 aufgenommen sind.

Die Anhängerstabilisierungseinrichtung 18 umfasst eine eigene elektronische Recheneinrichtung 40, welche einen dem Aktor 20 und dem Energiespeicher 22 gemeinsame elektronische Recheneinrichtung ist. Die elektronische Recheneinrichtung 40 ist beispielsweise im Gehäuse 36, insbesondere in dem Aufnahmeraum 38, aufgenommen. Die elektronische Recheneinrichtung 40 ist dazu ausgebildet, den Energiespeicher 22, insbesondere dessen Aufladen, zu steuern und/oder zu regeln und/oder zu überwachen. Darüber hinaus ist die elektronische Recheneinrichtung 40 dazu ausgebildet, den Aktor 20 anzusteuern und dadurch zu steuern und/oder zu regeln. Hierzu umfasst die elektronische Recheneinrichtung 40 beispielsweise ein zum Steuern und/oder Regeln und/oder Überwachen des Energiespeichers 22, insbesondere des Aufladens des Energiespeichers 22, ausgebildetes erstes Modul und ein zum Steuern und/oder Regeln des Aktors 20 ausgebildetes zweites Modul. Dabei ist vorzugsweise vorgesehen, dass die Module dazu ausgebildet sind, miteinander zu kommunizieren, das heißt dadurch Daten untereinander auszutauschen. Dadurch kann beispielsweise der Betrieb des Aktors 20 an den Energiespeicher 22, insbesondere an dessen auch als Ladezustand bezeichneten Ladungszustand, angepasst werden. Unter dem Ladezustand des Energiespeichers 22 ist eine noch in dem Energiespeicher 22 gespeicherte Menge an elektrischer Energie zu verstehen. Bei der in Fig. 5 veranschaulichten zweiten Ausführungsform sind die zuvor genannten Module durch die elektronische Recheneinrichtung 40 verwirklicht und dabei in den Aktor 20 integriert. Alternativ dazu ist es denkbar, insbesondere in der ersten Ausführungsform, dass beispielsweise das erste Modul eine eigene erste elektronische Recheneinrichtung und das zweite Modul eine eigene zweite elektronische Recheneinrichtung ist. Bezogen auf die erste Ausführungsform ist es dann beispielsweise vorgesehen, dass der Energiespeicher 22 mit der ersten elektronischen Recheneinrichtung ausgestattet ist, wobei beispielsweise der Aktor 20 mit der zweiten elektronischen Recheneinrichtung ausgestattet ist. Die erste elektronische Recheneinrichtung und die zweite elektronische Recheneinrichtung sind dann beispielsweise zwei voneinander externe beziehungsweise getrennte, jeweils eigenständige und separat voneinander hergestellte Bauelemente.

Vorzugsweise ist es vorgesehen, dass der bei der ersten Ausführungsform bezüglich des Aktors 20 externe und bei der zweiten Ausführungsform in den Aktor 20 integrierte Energiespeicher 22 ausschließlich dem Betrieb der Stabilisierungseinrichtung dient. Somit ist es vorzugsweise vorgesehen, dass ausschließlich die Stabilisierungseinrichtung mit der in dem Energiespeicher 22 gespeicherten elektrischen Energie versorgt wird, sodass nicht etwa andere elektrische Verbraucher mit in dem Energiespeicher 22 gespeicherter elektrischer Energie versorgt werden. Durch die Kommunikation der beschriebenen Module ist es möglich, dass unnötige Aktionen des Aktors 20 vermieden werden. Dadurch kann sichergestellt werden, dass in dem Energiespeicher 22 zumindest eine solche Energiemenge gespeichert ist, die für zumindest einen Stabilisierungsvorgang des Aktors 20 gerade noch ausreicht. Dadurch kann ein besonders sicherer Betrieb gewährleistet werden.

### BEZUGSZEICHENLISTE:

- 10: Anhänger
- 12: Rahmen
- 14: Rahmen
- 16: Bremseinrichtung
- 18: Anhängerstabilisierungseinrichtung
- 20: Aktor
- 22: Energiespeicher
- 24: Zuleitung
- 26: Ableitung
- 28: Gehäuse
- 30: Gehäuseelement
- 32: Gehäuseelement
- 34: Speicherzelle
- 36: Gehäuse
- 38: Aufnahmeraum
- 40: Recheneinrichtung

## Patentansprüche

1. Anhängerstabilisierungseinrichtung (18) für einen Anhänger (10), insbesondere für einen Wohnwagen, einen Caravan, einen Bootsanhänger, einen Verkaufswagen, einen Transportanhänger oder einen Autotransportanhänger, mit einer wenigstens einem Aktor (20), mittels welchem unter Betreiben des Aktors (20) eine Fahrt des Anhängers (10) zu stabilisieren ist, und mit wenigstens einem Anschlusselement, welches mit einer zum Bereitstellen von Energie ausgebildeten Energiequelle eines Zugfahrzeugs zum Bewegen des Anhängers (20) verbindbar ist, sodass der Aktor (20) über das Anschlusselement mit von der Energiequelle bereitgestellter Energie versorgbar und dadurch mittels der bereitgestellten Energie betreibbar ist,
**dadurch gekennzeichnet, dass**
die Anhängerstabilisierungseinrichtung (18) wenigstens einen eigenen, zum Speichern von Energie ausgebildeten Energiespeicher (22) aufweist, mittels welchem der Aktor (20) mit in dem Energiespeicher (22) gespeicherter Energie versorgbar und dadurch mittels der in dem Energiespeicher (22) gespeicherten Energie betreibbar ist.

2. Anhängerstabilisierungseinrichtung (18) nach Anspruch 1,
**dadurch gekennzeichnet, dass**
der Energiespeicher (22) dazu ausgebildet ist, eine für zumindest einen Stabilisierungsvorgang des Aktors (20) ausreichende Menge an Energie zu speichern.

3. Anhängerstabilisierungseinrichtung (18) nach Anspruch 1 oder 2,
**dadurch gekennzeichnet, dass**
der Energiespeicher (22) dazu ausgebildet ist, eine solche Menge an Energie zu speichern, die ausreicht, um eine Elektronik der Anhängerstabilisierungseinrichtung dauerhaft während einer Zeitspanne zu betreiben, während welcher eine durch die Energiequelle bewirkte Versorgung der Anhängerstabilisierungseinrichtung (18) mit Energie unterbleibt oder gegenüber einem Normalzustand zumindest reduziert ist.

4. Anhängerstabilisierungseinrichtung (18) nach einem der vorhergehenden Ansprüche,
**dadurch gekennzeichnet, dass**
der Aktor (20) als elektrisch betreibbarer Aktor (20) ausgebildet ist, mittels welchem unter elektrischem Betreiben des Aktors (20) eine Fahrt des Anhängers (10) zu stabilisieren ist, wobei das Anschlusselement zumindest elektrisch mit der zum Bereitstellen von elektrischer Energie ausgebildeten Energiequelle des Zugfahrzeugs zum Bewegen des Anhängers (10) verbindbar ist, sodass der Aktor (20) über das Anschlusselement mit von der Energiequelle bereitgestellter elektrischer Energie versorgbar und dadurch mittels der bereitgestellten elektrischen Energie betreibbar ist, und wobei der Energiespeicher (22) zum Speichern von elektrischer Energie ausgebildet ist, sodass der Aktor (20) mittels des Energiespeichers (22) mit in dem Energiespeicher (22) gespeicherter elektrischer Energie versorgbar und dadurch mittels der in dem Energiespeicher (22) gespeicherten elektrischen Energie elektrisch betreibbar ist.

5. Anhängerstabilisierungseinrichtung (18) nach Anspruch 4,
**dadurch gekennzeichnet, dass**
der Energiespeicher (22) dazu ausgebildet ist, eine für zumindest einen Stabilisierungsvorgang des Aktors (20) ausreichende Menge an elektrischer Energie zu speichern und/oder dass der Energiespeicher (22) dazu ausgebildet ist, eine solche Menge an elektrischer Energie zu speichern, die ausreicht, um eine Elektronik der Anhängerstabilisierungseinrichtung dauerhaft während einer Zeitspanne zu betreiben, während welcher eine durch die Energiequelle bewirkte Versorgung der Anhängerstabilisierungseinrichtung (18) mit Energie unterbleibt oder gegenüber einem Normalzustand zumindest reduziert ist.

6. Anhängerstabilisierungseinrichtung (18) nach Anspruch 4 oder 5,
**dadurch gekennzeichnet, dass**
der Energiespeicher (22) wenigstens eine Batterie und/oder wenigstens einen Akkumulator und/oder wenigstens einen Kondensator, insbesondere wenigstens einen Superkondensator, zum Speichern der elektrischen Energie aufweist.

7. Anhängerstabilisierungseinrichtung (18) nach einem der vorhergehenden Ansprüche,
**dadurch gekennzeichnet, dass**
der Energiespeicher (22) über das Anschlusselement mit zumindest einem Teil der von der Energiequelle bereitgestellten Energie versorgbar ist, sodass unter Speichern zumindest des Teils in dem Energiespeicher (22) der Energiespeicher (22) mit von der Energiequelle bereitgestellter Energie aufladbar ist.

8. Anhängerstabilisierungseinrichtung (18) nach Anspruch 7,
**dadurch gekennzeichnet, dass:**
- die Anhängerstabilisierungseinrichtung (18), insbesondere der Energiespeicher (22), eine eigene elektronische Recheneinrichtung (40) aufweist, welche dazu ausgebildet ist den Energiespeicher (22), insbesondere das Aufladen des Energiespeichers (22), zu steuern und/oder zu regeln und/oder zu überwachen, und/oder den Aktor (20) anzusteuern und dadurch zu steuern und/oder zu regeln, und/oder
- ein zum Steuern und/oder Regeln und/oder Überwachen des Energiespeichers (22), insbesondere des Aufladens des Energiespeichers (22), ausgebildetes erstes Modul und ein zum Steuern und/oder Regeln des Aktors (20) ausgebildetes zweites Moduls vorgesehen sind, wobei die Module dazu ausgebildet sind, miteinander zu kommunizieren und dadurch Daten untereinander auszutauschen.

9. Anhängerstabilisierungseinrichtung (18) nach Anspruch 8,
**dadurch gekennzeichnet, dass**
die elektronische Recheneinrichtung (40) und/oder das erste Modul dazu ausgebildet ist, eine in dem Energiespeicher (22) gespeicherte Menge der Energie zu ermitteln und/oder wenigstens ein die ermittelte Menge charakterisierendes, insbesondere elektrisches, Signal bereitzustellen.

10. Anhängerstabilisierungseinrichtung (18) nach einem der vorhergehenden Ansprüche,
**dadurch gekennzeichnet, dass:**
- der Aktor (20) und der Energiespeicher (22) als separat voneinander ausgebildete und elektrisch und mechanisch, insbesondere reversibel lösbar, miteinander verbundene oder verbindbare Komponenten ausgebildet sind, oder dass der Energiespeicher (22) in den Aktor (20) integriert ist und/oder
- der Energiespeicher (22), insbesondere dessen elektronische Recheneinrichtung (40), wenigstens einen Anschluss aufweist, über welchen der Energiespeicher (22), insbesondere dessen elektronische Recheneinrichtung (40), mit einem Datenbus verbindbar ist, sodass der Energiespeicher (22), insbesondere dessen elektronische Recheneinrichtung (40), dazu ausgebildet ist, über den Anschluss Daten zu senden und/oder über den Anschluss von wenigstens einem weiteren elektronischen Gerät über den Datenbus bereitgestellte Daten zu empfangen, und/oder
- der Energiespeicher (22), insbesondere dessen elektronische Recheneinrichtung (40), wenigstens ein Sende- und/oder Empfangselement aufweist, sodass der Energiespeicher (22), insbesondere dessen elektronische Recheneinrichtung (40), dazu ausgebildet ist, über das Sende- und/oder Empfangselement Daten an ein bezüglich des Anhängers (10) externes mobiles Endgerät, insbesondere kabellos, zu senden und/oder von einem bezüglich des Anhängers (10) externen mobilen Endgerät bereitgestellte Daten, insbesondere kabellos, zu empfangen.

11. Anhängerstabilisierungseinrichtung (18) nach einem der vorhergehenden Ansprüche,
**dadurch gekennzeichnet, dass:**
- der Energiespeicher (22) dazu ausgebildet ist, ausschließlich die Anhängerstabilisierungseinrichtung (18) mit in dem Energiespeicher (22) gespeicherter Energie zu versorgen, und/oder
- der Energiespeicher (22) als mechanischer Energiespeicher ausgebildet ist, welcher wenigstens eine Feder zum Speichern von mechanischer Energie aufweist, und/oder
- der Energiespeicher (22) als Druckluftspeicher zum Speichern von Druckluft ausgebildet ist.

12. Anhängerstabilisierungseinrichtung (18) nach einem der vorhergehenden Ansprüche,
**dadurch gekennzeichnet, dass**
eine elektronische Auswerteeinheit vorgesehen ist, welche dazu ausgebildet ist, wenigstens ein von zumindest einem Sensor bereitgestelltes Signal zu empfangen, anhand des Signals eine Fahrt des Anhängers zu ermitteln und infolge des Ermittelns der Fahrt eine Überführung der Anhängerstabilisierungseinrichtung (18) aus einem Ruhezustand in einen Aktivzustand zu bewirken.

13. Anhängerstabilisierungseinrichtung (18) nach Anspruch 12,
**dadurch gekennzeichnet, dass**
die Anhängerstabilisierungseinrichtung (18) den Sensor aufweist und/oder dass der Sensor als Beschleunigungssensor, Geschwindigkeitssensor, Impulssensor, Schwingungssensor und/oder Gierratensensor ausgebildet ist.

14. Anhänger (10), insbesondere Wohnwagen, Caravan, Bootsanhänger, Verkaufswagen, Transportanhänger oder Autotransportanhänger, mit einer Anhängerstabilisierungseinrichtung (18) nach einem der vorhergehenden Ansprüche.
